# EUROPEAN PATENT APPLICATION

(11) **EP 4 570 480 A1**
(43) Date of publication of application: **18.06.2025**
(21) Application number: 23852275.9
(22) Date of filing: 05.07.2023
(51) Int. Cl.: B29C 65/02

(54) **JOINED OBJECT PRODUCTION METHOD, JOINED OBJECT, AND ELECTRIC/ELECTRONIC COMPONENT**

(30) Priority: 10.08.2022 JP 2022127867
(71) Applicant: Resonac Corporation, Tokyo 105-7325 (JP)
(72) Inventor: TAKAHASHI Nobuyuki, Tokyo 105-7325 (JP); SAITO Hayato, Tokyo 105-7325 (JP)
(74) Representative: Strehl & Partner mbB
(86) International application number: PCT/JP2023/024873
(87) International publication number: WO 2024/034292

(57) **Abstract**

Provided is a method for producing a joined object obtained by joining a columnar base material A, a thermoplastic film B, and a resin C in this order, the method including sequentially performing: a step 1 of winding the thermoplastic film B around at least a part of an outer periphery of the columnar base material A in a peripheral direction; and a step 2 of joining the resin C to a portion of the columnar base material A around which the thermoplastic film B is wound by insert molding to seal the thermoplastic film B.

## Description

### Technical Field

The present invention relates to a method for producing a joined object in which dissimilar materials are firmly joined, a joined object, and an electric/electronic component.

### Background Art

In recent years, from the viewpoint of weight reduction and high performance in products, multi-materialization of components has been advanced in various fields such as automobile components, medical devices, and home electric appliances. Multi-materialization is a method for reducing the weight and increasing the strength of materials by using materials with different functions and materials (hereinafter, referred to as dissimilar materials) in combination. In order to realize multi-materialization, a technique for firmly joining dissimilar materials is indispensable.

An example of a product using a component requiring multi-materialization is a capacitor. The capacitor is provided with at least an insulator and an electrode body inside an outer container. In many electrode bodies, a positive electrode body and a negative electrode body extend from a through hole of the outer container in order to exchange electricity with the outside. In order to protect the inside of the outer container from a problem such as deterioration due to the atmosphere, for example, a method of sealing a gap between the electrode body and the through hole by using a resin material as a sealing material is adopted. In particular, electronic devices often cause malfunctions due to slight moisture or powder dust, and thus high adhesiveness (leakage resistance) is required for the sealing portion.

For example, a technique is known in which a resin material serving as a sealing material is used to seal the periphery of the metal terminals by insert molding such as injection molding. However, when the resin material is sealed to the metal by insert molding, there is a risk of leakage from the gap. In particular, when a resin material is sealed so as to cover the periphery of a metal terminal or the like, more excellent leakage resistance is required.

Therefore, as a means for sealing the metal terminal or the like with a resin material, for example, a method in which a liquid adhesive or varnish is applied to the metal terminal and then the metal terminal is sealed with the resin material by insert molding has been studied. Specifically, a technique is known in which a primer layer is provided by applying an in-situ polymerization type composition to an electrode body and polymerizing the composition, and then a sealing portion is formed (PTL 1). Further, a technique is known in which an external terminal is immersed in a bath filled with a cationic epoxy resin-based electrodeposition coating material, a terminal adhesive layer is provided by energizing the external terminal, and then a sealing member is formed (PTL 2).

In addition, a method of sealing a metal terminal with a resin material by insert molding after roughening the surface of the metal terminal has been studied. Specifically, a technique in which a surface layer of a joint surface of the metal terminal with the sealing resin is polished by mechanical polishing such as sandblasting, shot blasting, grinding, and barrel processing, or chemical polishing has been known (PTL 3).

### Citation List

### Patent Literature

PTL 1: JP 2021-157887 A
PTL 2: JP 2020-88137 A
PTL 3: JP 2016-126989 A

### Summary of Invention

### Technical Problem

However, the technique of applying the liquid adhesive may take time for adhesion, and problems such as pot life (usable time) and labor are likely to occur. In addition, the leakage resistance may be impaired due to an insufficient coating amount or an uneven coating operation, or a contamination risk may occur due to an excessive coating amount, resulting in poor workability.

In addition, in a case where a liquid thermosetting adhesive is used, when the metal terminal is repeatedly exposed to a high temperature and a low temperature (during a thermal cycle), the metal terminal and the sealing resin are displaced due to a difference in linear expansion coefficient between the metal terminal and the sealing resin, and a stress is applied to the adhesive layer. Then, the adhesive layer cannot relax the stress and is peeled off, so that leakage is likely to occur. This is because the thermosetting adhesive layer does not have thermoplasticity and is rapidly broken when reaching a plastic deformation region.

In addition, by roughening the surface of the electrode body, the adhesive force with the sealing material can be increased, but a gap is likely to occur between the roughened surface of the electrode body and the sealing material, and there is a concern that the leakage resistance will be insufficient. In addition, since there is no layer that relaxes stress during a thermal cycle as described above, peeling is likely to occur.

In order to further ensure the sealing property, not only the base material and the sealing material are more strongly adhered to each other, but also stress relaxation during a thermal cycle is required.

Therefore, an object of the present invention is to provide a method for producing a joined object in which a joining process time is short, dissimilar materials are firmly joined, and leakage resistance is excellent, a joined object, and an electric/electronic component.

### Solution to Problem

The present inventors have found that the above-mentioned problems can be solved by winding a predetermined film around a base material, joining the film to the base material, and then sealing the film with a resin.

In other words, the present invention is as follows.

[1] A method for producing a joined object obtained by joining a columnar base material A, a thermoplastic film B, and a resin C in this order, the method including sequentially performing:
   a step 1 of winding the thermoplastic film B around at least a part of an outer periphery of the columnar base material A in a peripheral direction; and
   a step 2 of joining the resin C to a portion of the columnar base material A around which the thermoplastic film B is wound by insert molding to seal the thermoplastic film B.
[2] The method for producing a joined object according to [1], in which the thermoplastic film B has adhesive property to the columnar base material A.
[3] The method for producing a joined object according to [1] or [2], in which in the step 1, an operation of melting and solidifying the wound thermoplastic film B to join the columnar base material A and the thermoplastic film B is further performed.
[4] The method for producing a joined object according to [3], in which in the step 1, the joining of the columnar base material A and the thermoplastic film B is performed by at least one selected from the group consisting of contact heating, hot air heating, hot pressing, infrared heating, hot plate welding, ultrasonic welding, vibration welding, and high-frequency induction welding.
[5] The method for producing a joined object according to [3] or [4], in which in the step 1, the joining of the columnar base material A and the thermoplastic film B is performed at a heating temperature of 100 to 300°C.
[6] The method for producing a joined object according to any one of [1] to [5], in which a width of the thermoplastic film B in a direction perpendicular to the peripheral direction is 3 to 30 mm.
[7] The method for producing a joined object according to any one of [1] to [6], in which the thermoplastic film B has a thickness of 10 µm or more and 3 mm or less.
[8] The method for producing a joined object according to any one of [1] to [7], in which when the melting point of the thermoplastic film B or a temperature obtained by adding 70°C to the glass transition point temperature when the melting point does not exist is taken as X°C, and the resin temperature at the time of molding the resin C is taken as Y°C, a value obtained by subtracting the X°C from the Y°C is 100 to 250°C.
[9] The method for producing a joined object according to any one of [1] to [8], in which the thermoplastic film B contains an amorphous thermoplastic resin as a main component.
[10] The method for producing a joined object according to [9], in which the amorphous thermoplastic resin is at least one selected from the group consisting of a thermoplastic epoxy resin and a phenoxy resin.
[11] The method for producing a joined object according to any one of [1] to [10], in which the thermoplastic film B is a thermoplastic resin having an epoxy equivalent of 1,600 g/eq. or more or containing no epoxy group.
[12] The method for producing a joined object according to any one of [1] to [11], in which the columnar base material A is a metal.
[13] The method for producing a joined object according to any one of [1] to [12], in which the resin C is a thermoplastic resin.
[14] A joined object obtained by the method for producing a joined object according to any one of [1] to [13], in which when a leakage test is performed by applying an air pressure of 0.1 MPaG to the sealing portion, an amount of air leakage is 1 mL/min or less.
[15] The joined object according to [14], in which when the joined object is heated to a temperature equal to or higher than the glass transition temperature of the thermoplastic film B and equal to or lower than 160°C, kept at the temperature for 1000 minutes, cooled to 23°C, and then subjected to the leakage test, an amount of air leakage is 1 mL/min or less.
[16] An electric/electronic component including a joined object selected from a joined object obtained by the method for producing a joined object according to any one of [1] to [13] and a joined object according to [14] or [15].
[17] The electric/electronic component according to [16], which is a terminal block or an electric element.

### Advantageous Effects of Invention

According to the present invention, it is possible to provide a method for producing a joined object in which the joining process time is short, dissimilar materials are firmly joined, and leakage resistance is excellent, a joined object, and an electric/electronic component.

### Brief Description of Drawings

Fig. 1 is a front view showing an example of an embodiment of a film-attached base material.
Fig. 2 is an illustrative view of the step 1 in a cross section of a B-B' cut surface parallel to the Y axis of the film-attached base material of Fig. 1.
Fig. 3 is an illustrative view of the step 2 by a cross section of the film-attached base material obtained in the step 1 and a mold.
Fig. 4 is a cross-sectional view of a cut surface parallel to the width direction of the joined object.
Fig. 5 is a cross-sectional view of a cut surface parallel to the length direction of the joined object.
Fig. 6 is a schematic view of a joined object for explaining an example.

### Description of Embodiments

Hereinafter, embodiments of the present invention will be described in detail.

In the description herein, the term "joining" means joining objects to each other, and adhesion and welding are subordinate concepts thereof. The term "adhesion" means that two adherends (objects to be adhered) are brought into a joined state via an organic material (thermosetting resin or thermoplastic resin) such as a tape or an adhesive. The term "welding" means that the surface of a thermoplastic resin or the like is melted by heat and cooled to cause entanglement due to molecular diffusion, thereby forming a joined state. The "adhesive property" means a property having an adhesive strength capable of connecting an object to another object.

In the description herein, the "joined object obtained by joining in this order" means that the members are spatially joined in this order.

In the description herein, the "joining process time" means a time from a start point to an end point, where the start point is the time of contact between the base material and the film constituting the joined object, and the end point is the time of completion of the production of the joined object. For example, the joining process time includes a step of winding the film around the base material, and a time required to join and seal the resin by insert molding.

### <Method for Producing Joined Object>

The method for producing a joined object of the present embodiment is a method for producing a joined object obtained by joining a columnar base material A, a thermoplastic film B, and a resin C in this order, the method including sequentially performing:
a step 1 of winding the thermoplastic film B around at least a part of an outer periphery of the columnar base material A in a peripheral direction; and
a step 2 of joining the resin C to a portion of the columnar base material A around which the thermoplastic film B is wound by insert molding to seal the thermoplastic film B.

By providing the thermoplastic film B between the columnar base material A and the resin C which is a sealing material, the columnar base material A and the resin C are firmly joined. Furthermore, since the thermoplastic film B can be wound around the columnar base material A, it can be said that this operation is more effective than applying a liquid joining agent or the like in shortening the joining process. In addition, by using the thermoplastic film B having a uniform thickness, as compared with the case where a liquid joining agent or the like is applied, a non-uniform portion such as an uncoated portion or sagging does not occur, and excellent leakage resistance can be exhibited.

A more detailed reason why the effect of the present invention is obtained will be considered as follows.

By providing a thermoplastic resin that has completed a chemical reaction such as polymerization between the columnar base material A and the resin C, it is possible to perform a rapid curing that utilizes a phase change between a solid and a liquid, and it is possible to shorten the joining process. In addition, by using the thermoplastic resin in the form of a film shape, as compared with the case of applying a liquid joining agent having an irregular shape, there is no complication in handling the liquid, and the joining process time may be shortened.

In addition, since a thermoplastic resin has a thermoplasticity even at a high temperature, it is possible to relax the stress, and it is possible to reset the stress for each cycle during a thermal cycle, and to prevent peeling. Therefore, by using the thermoplastic film B, plastic deformation can be performed, and the stress can be effectively relaxed, so that a joined object which is hardly peeled during the thermal cycle and has excellent leakage resistance can be obtained. Further, since the resin C is softened when the joined object is exposed to a high temperature, the stress can be more effectively relaxed, and therefore the leakage resistance is excellent.

Furthermore, as an example of a preferred embodiment, in a case where an amorphous thermoplastic film B is used as the thermoplastic film B, the film is less likely to undergo a rapid decrease in viscosity during heating, and thus the shape for maintaining the leakage resistance can be maintained when the joined object is exposed to a high temperature.

### [Step 1]

In the step 1, the thermoplastic film B is wound around at least a part of an outer periphery of the columnar base material A in a peripheral direction.

Here, the "at least a part of an outer periphery" means at least a part of the columnar base material A in the major axis direction. In addition, the term "winding" means that the thermoplastic film B is wound one round or more than one round in the peripheral direction of the columnar base material A.

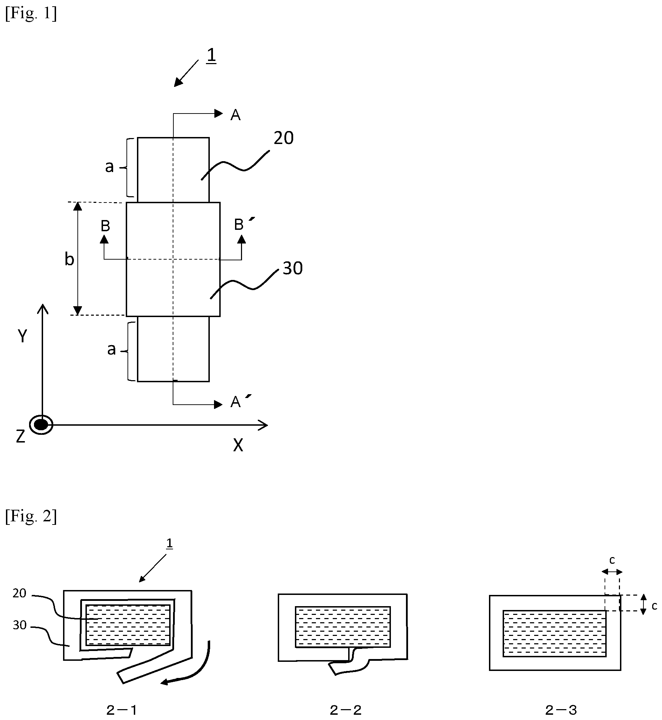

One example of the embodiment of the step 1 will be described with reference to Fig. 1 and Fig. 2.

Fig. 1 is a front view showing an example of an embodiment of a film-attached base material. Fig. 2 is an illustrative view of the step 1 in a cross section of a B-B' cut surface parallel to the Y axis of the film-attached base material of Fig. 1.

As shown in Fig. 1 and Fig. 2, the thermoplastic film B 30 may be wound around the outer periphery of at least a part of the columnar base material A 20. At this time, as shown in Fig. 1, a part of the columnar base material A 20 may have a non-adhering portion a of the thermoplastic film B 30, may not have the non-adhering portion a, or may have the non-adhering portion a only on one end of the columnar base material A 20. It is preferable that the columnar base material A 20 has the non-adhering portion a at both ends.

In the step 1, first, as shown in 2-1 of Fig. 2, the thermoplastic film B 30 is wound around the outer periphery of the columnar base material A 20 in the peripheral direction. At this time, as shown in 2-2 of Fig. 2, the thermoplastic film B 30 may be wound so that the thermoplastic film B 30 continuously covers the outer periphery of the columnar base material A 20. Since the thermoplastic film B 30 is wound one round or more than one round in the peripheral direction of the columnar base material A 20, there is no gap at both end sides of the wound thermoplastic film B 30, the sealing property becomes high, and excellent leakage resistance can be exhibited.

Further, the thermoplastic film B may have tackiness. From the viewpoint of ease of handling, it is preferable that the thermoplastic film B has tackiness and is temporarily fixed to the columnar base material A.

In addition, the thermoplastic film B may be temporarily fixed by being wound around the columnar base material A after a pressure-sensitive adhesive is applied to the thermoplastic film B to the extent that the leakage resistance is not impaired. As the pressure-sensitive adhesive, a commercially available product can be used.

After the thermoplastic film B is wound around the outer periphery of the columnar base material A as described above, it is preferable to perform an operation of melting and solidifying the wound thermoplastic film B to join the columnar base material A and the thermoplastic film B.

To be specific, as shown in 2-2 of Fig. 2, after the thermoplastic film B 30 is wound around the columnar base material A 20, the thermoplastic film B 30 may be melted and solidified. Since the thermoplastic film B 30 is thermoplastic, as shown in 2-3 of Fig. 2, the thermoplastic film B 30 is closely adhered to and joined to the columnar base material A 20 without a gap.

In the present embodiment, the thermoplastic film B can be melted and solidified by insert-molding the resin C in the next step 2. Therefore, the thermoplastic film B may be melted and solidified by heating in the molding step of the resin C in the step 2 without melting and solidifying the thermoplastic film B in the step 1. On the other hand, by melting and solidifying the thermoplastic film B in advance, the columnar base material A and the thermoplastic film B can be more reliably joined and integrated, so that the sealing property can be enhanced, and the leakage resistance can be further improved.

### [Melting and Solidification]

In the joining of the columnar base material A and the thermoplastic film B, examples of the method for melting the thermoplastic film B include at least one method selected from the group consisting of contact heating, hot air heating, hot pressing, hot plate welding, infrared heating, ultrasonic welding, vibration welding, and high-frequency induction welding.

Among these, hot pressing or high-frequency induction welding is preferable from the viewpoint of ease of production and shortening of the joining process.

In the joining of the columnar base material A and the thermoplastic film B, when the thermoplastic film B is melted by heating, the heating temperature of the joining surface between the columnar base material A and the thermoplastic film B may be determined in consideration of the heat-resistant temperature of the material of the columnar base material A, and is preferably 100 to 300°C, more preferably 120 to 250°C, and further preferably 150°C to 220°C. By heating at 100 to 300°C, the thermoplastic film B is efficiently deformed and melted, and effectively wets and spreads on the joining surface, so that a high joining force can be obtained.

Examples of the method for solidifying the molten thermoplastic film B include a method in which the molten thermoplastic film B is allowed to cool at ordinary temperature and a method in which the molten thermoplastic film B is allowed to cool using a cooling device. The term "ordinary temperature" means a general room temperature within a range of 5 to 30°C. Among these, a method in which the molten thermoplastic film B is allowed to cool at room temperature is preferable from the viewpoint of ease of production.

In the description herein, the term "solidification" means that the material is solid at ordinary temperature, that is, the material does not have fluidity at 23°C in a non-pressurized state.

### [Columnar Base Material A]

The shape of the columnar base material A is not particularly limited. Examples of the shape of a cross section perpendicular to the length direction of the columnar base material A include a circular shape, a semicircular shape, an elliptical shape, a square shape, a rectangular shape, a triangular shape, and other polygonal shapes. The polygonal shape may be a regular polygonal shape or a shape other than the regular polygonal shape. The columnar base material A also includes a quadrangular prism (strip) having a rectangular cross section with a large aspect ratio.

Examples of the material of the columnar base material A include metals and inorganic substances. As the material of the columnar base material A, one type may be used alone, or two or more types may be used in combination.

From the viewpoint of heat resistance and strength, the columnar base material A is preferably a metal. In a case where the material of the columnar base material A is a resin, the material of the resin needs to have a melting point or a glass transition temperature at which the resin is not deformed at the temperature in the insert molding in the step 2.

The metal is not particularly limited, and examples thereof include aluminum, iron, copper, magnesium, and titanium.

In the present embodiment, the term "iron" is used to include iron and alloys thereof. Examples of the alloys of iron include steel and stainless steel. Similarly, copper, aluminum, magnesium, and titanium are also used to include simple substances thereof and alloys thereof.

The inorganic substance is not particularly limited, and examples thereof include glass, ceramic, and carbon molded object.

The glass may be, for example, heat-resistant glass, fire-proof glass, fire-resistant glass, or chemically strengthened glass used for protection of a smartphone or the like, in addition to general glass. Specific examples thereof include soda lime glass, lead glass, borosilicate glass, and quartz glass.

Examples of the ceramics include fine ceramics used for semiconductors, automobiles, industrial equipment, and the like. Specific examples thereof include oxide-based ceramics such as alumina, zirconia, and barium titanate; hydroxide-based ceramics such as hydroxyapatite; carbide-based ceramics such as silicon carbide; and nitride-based ceramics such as silicon nitride.

Examples of the resin used as the material of the columnar base material A include a glass fiber-reinforced thermosetting resin, a cured product of a thermosetting resin such as an epoxy resin compound, a vinyl ester resin, and an unsaturated polyester, and a high heat-resistant engineering plastic such as a polyimide resin, polyetherimide, and polyethersulfone.

### (Pretreatment)

The surface of the columnar base material A is preferably subjected to pretreatment for the purpose of removing contaminants on the surface and/or achieving an anchor effect.

Examples of the pretreatment include a degreasing treatment, a UV ozone treatment, a blast treatment, a polishing treatment, a plasma treatment, a corona discharge treatment, a laser treatment, an etching treatment, and a flame treatment.

As the pretreatment, a pretreatment of cleaning the surface of the columnar base material A or a pretreatment of imparting unevenness to the surface is preferable. Specifically, when the columnar base material A is made of aluminum, copper, glass, ceramic, or iron, at least one selected from the group consisting of a degreasing treatment, a UV ozone treatment, a blast treatment, a polishing treatment, a plasma treatment, and an etching treatment is preferable. When the columnar base material A is made of FRP, polypropylene, polycarbonate, polymethyl methacrylate, polyetherimide, polyamide, or polybutylene terephthalate, at least one selected from the group consisting of a degreasing treatment, a UV ozone treatment, a blast treatment, a polishing treatment, a plasma treatment, and a corona discharge treatment is preferable.

Only one type of pretreatment may be performed, or two or more types of pretreatment may be performed. As a specific method of the pretreatment, a known method can be used.

The degreasing treatment is a method of removing stains such as fats and oils on the surface of the columnar base material A by dissolving them with an organic solvent such as acetone or toluene.

The UV ozone treatment is a method of cleaning or modifying surfaces by the energy of short-wavelength ultraviolet light emitted from a low pressure mercury lamp and the power of ozone (O₃) generated thereby. In the case of glass, it is one of surface cleaning methods for removing organic impurities on the surface. In general, a cleaning surface modification apparatus using a low pressure mercury lamp is called a "UV ozone cleaner", a "UV cleaning apparatus", or an "ultraviolet surface modification apparatus".

Examples of the blast treatment include a wet blast treatment, a shot blast treatment, and a sand blast treatment. Among these, the wet blast treatment is preferable because a denser surface can be obtained compared to the dry blast treatment.

Examples of the polishing treatment include buffing using a polishing cloth, roll polishing using a polishing paper (sandpaper), and electrolytic polishing.

The plasma treatment is a method in which a plasma beam is generated by a high-voltage power supply and a rod, and the plasma beam is applied to the surface of the material to excite molecules to be in a functional state, and examples thereof include an atmospheric pressure plasma treatment method capable of imparting a hydroxy group or a polar group to the surface of the material.

Examples of the corona discharge treatment include a method of modifying the surface of a polymer film, and the corona discharge treatment is a method of generating a hydroxy group or a polar group on the surface starting from a radical generated by cutting a polymer main chain or a side chain of a polymer surface layer with electrons emitted from an electrode.

The laser treatment is a technique of rapidly heating and cooling only the surface of the columnar base material A by laser irradiation to improve the characteristics of the surface, and is an effective method for roughening the surface. Known laser treatment techniques can be used.

Examples of the etching treatment include chemical etching treatments such as an alkali method, a phosphoric acid-sulfuric acid method, a fluoride method, a chromic acid-sulfuric acid method, and an iron chloride method, and electrochemical etching treatments such as an electrolytic etching method.

The flame treatment is a method in which a mixed gas of a combustion gas and air is burned to convert oxygen in the air into plasma, and the oxygen plasma is applied to an object to be treated to make the surface hydrophilic. Known flame treatment techniques can be used.

### [Thermoplastic Film B]

The thermoplastic film B contains a thermoplastic resin as a main component. In addition, the thermoplastic film B preferably has adhesive property to the columnar base material A.

The "main component" means a component having the highest content among the resin components in the thermoplastic film B. The thermoplastic film B contains the resin component in an amount of preferably 50% by mass or more, more preferably 70% by mass or more, still more preferably 80% by mass or more, and particularly preferably 90% by mass or more.

The term "film" refers to a thin film formed from a resin composition containing a thermoplastic resin as a main component.

### <<Y°C - X°C>>

In a case where the thermoplastic resin used for the thermoplastic film B has a melting point, when the melting point of the thermoplastic film B is taken as X°C, or in a case where the melting point does not exist in the thermoplastic resin used for the thermoplastic film B, when a temperature obtained by adding 70°C to the glass transition temperature is taken as X°C, and the resin temperature at the time of molding the resin C is taken as Y°C, a value (Y°C - X°C) obtained by subtracting X°C from Y°C is preferably 0 to 300°C, more preferably 50 to 250°C, further preferably 100 to 250°C, and still further preferably 125 to 210°C.

When Y°C -X°C is in the range of 0 to 300°C, the thermoplastic film B is efficiently melted by heating with the resin C at the time of molding, and effectively wets and spreads on the joining surface, so that high adhesiveness is obtained and the leakage resistance is excellent.

In the description herein, the melting point of the thermoplastic resin means a melting peak temperature measured by DSC. In a case where a melting peak is not obtained or a heat of fusion is 15 J/g or less, a temperature obtained by adding 70°C to the glass transition temperature is regarded as the melting point. The glass transition temperature means a temperature at the start of descent of a DSC curve in the second cycle of a cycle in which the temperature is raised to 200°C by DSC, then cooled to 40°C or lower, and further heated to 200°C. Specifically, the glass transition temperature is a value measured by a method described in Examples.

### <<Amorphous Thermoplastic Resin>>

The thermoplastic film B preferably contains an amorphous thermoplastic resin as a main component.

The amorphous thermoplastic resin refers to a resin that does not have crystals or has a small amount of crystals if any, and has a heat of fusion of 15 J/g or less.

The heat of fusion is calculated from the area of the endothermic peak of DSC (differential scanning calorimeter) and the weight of the thermoplastic resin component. When an inorganic filler or the like is contained in the film, the heat of fusion is calculated from the weight of the thermoplastic resin component excluding the inorganic filler. To be specific, 2 to 10 mg of a sample is weighed and placed in an aluminum pan, the temperature is raised from 23°C to 200°C or higher at 10°C/min using DSC (DSC8231, manufactured by Rigaku Corporation) to obtain a DSC curve, and then the heat of fusion can be calculated from the area of the endothermic peak at the time of melting obtained from the DSC curve and the weighed value.

The heat of fusion of the amorphous thermoplastic resin is more preferably 11 J/g or less, further preferably 7 J/g or less, still further preferably 4 J/g or less, and it is particularly preferable that the melting peak is equal to or lower than the detection limit.

By using the thermoplastic film B containing an amorphous thermoplastic resin having a heat of fusion of 15 J/g or less as a main component, a rapid decrease in viscosity as seen in a conventional hot melt adhesive does not occur during heating, and a low viscosity (0.001 to 100 Pa·s) state is not reached even in a high temperature region of more than 200°C. Therefore, even in a molten state, the thermoplastic film B does not flow out from between the columnar base material A and the resin C, the thickness of the thermoplastic film B can be stably secured, and a high joining force can be stably obtained.

From the viewpoint of sufficiently imparting the properties of the amorphous thermoplastic resin to the thermoplastic film B, the content of the amorphous thermoplastic resin is preferably 60% by mass or more, more preferably 70% by mass or more, further preferably 80% by mass or more, and most preferably 90% by mass or more of the resin components in the thermoplastic film B.

From the viewpoint of sealing property and toughness, the amorphous thermoplastic resin is preferably at least one selected from the group consisting of a thermoplastic epoxy resin and a phenoxy resin.

In particular, from the viewpoint of sealing property and toughness, the thermoplastic film B more preferably contains, as a main component, an amorphous thermoplastic resin that is at least one of a thermoplastic epoxy resin and a phenoxy resin. In addition, from the viewpoint of sealing property and toughness, it is further preferable that the thermoplastic film B contains, as a main component, an amorphous thermoplastic resin which is at least one of a thermoplastic epoxy resin and a phenoxy resin, has an epoxy equivalent of 1,600 or more, and a heat of fusion of 15 J/g or less.

The "main component" means a component having the highest content among the resin components in the thermoplastic film B. The thermoplastic film B contains the resin component in an amount of preferably 50% by mass or more, more preferably 70% by mass or more, still more preferably 80% by mass or more, and particularly preferably 90% by mass or more.

Since the thermoplastic epoxy resin and the phenoxy resin have a low cohesive force in the resin and can have a hydroxy group, they have a strong interaction with the columnar base material A and the resin C, and thus it can be expected to join dissimilar materials with a higher joining force than conventional crystalline hot-melt adhesives.

Above all, from the viewpoint of storability, it is preferable that the thermoplastic film B is a thermoplastic resin having an epoxy equivalent of 1,600 g/eq. or more or containing no epoxy group.

The epoxy equivalent is more preferably 2,000 g/eq. or more, further preferably 5,000 g/eq. or more, still further preferably 9,000 g/eq. or more, and it is particularly preferable that the epoxy equivalent is equal to or higher than the detection limit and the epoxy group is not substantially detected. The epoxy equivalent being equal to or higher than the detection limit means that the epoxy group is not detected when the epoxy equivalent is measured based on JIS K 7236:2001 to be described later.

The epoxy equivalent (the weight of the thermoplastic resin containing 1 mol of epoxy group) referred to here is the value of the epoxy equivalent of the thermoplastic resin contained in the thermoplastic film B before joining, and is a value measured by a method defined in JIS K 7236:2001 (unit: "g/eq. "). Specifically, the epoxy equivalent is a value obtained by adding a brominated tetraethylammonium acetic acid solution using a potentiometric titration device, using a 0.1 mol/L perchloric acid-acetic acid solution, and calculating a numerical value of a solvent diluted product (resin varnish) as a value in terms of a solid content from a nonvolatile component. In the case of a mixture of two or more resins, the epoxy equivalent can also be calculated from the content of each resin and the epoxy equivalent.

### <<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer proceeds preferentially, and a thermoplastic epoxy resin having desired properties can be obtained.

The bifunctional epoxy resin monomer or oligomer (a) refers to an epoxy resin monomer or oligomer having two epoxy groups in the molecule.

Specific examples of the bifunctional epoxy resin monomer or oligomer (a) include bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester), bifunctional glycidylamine type epoxy resins (e.g., diglycidyl aniline, diglycidyl toluidine), bifunctional heterocyclic epoxy resins, bifunctional diarylsulfone type epoxy resins, hydroquinone type epoxy resins (e.g., hydroquinone diglycidyl ether, 2,5-di-tert-butylhydroquinone diglycidyl ether, resorcin diglycidyl ether), bifunctional alkylene glycidyl ether-based compounds (e.g., butanediol diglycidyl ether, butenediol diglycidyl ether, butynediol diglycidyl ether), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin), bifunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group of the component (b) include mononuclear aromatic dihydroxy compounds having one benzene ring, such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds into which an allyl group is introduced, such as diallyl resorcin, diallyl bisphenol A, and triallyl dihydroxybiphenyl; and dibutyl bisphenol A.

Specific examples of the carboxy group-containing compound of the component (b) include adipic acid, succinic acid, malonic acid, cyclohexanedicarboxylic acid, phthalic acid, isophthalic acid, and terephthalic acid.

Examples of the mercapto group-containing bifunctional compound of the component (b) include ethylene glycol bisthioglycolate and ethylene glycol bisthiopropionate.

Specific examples of the isocyanate group-containing bifunctional compound of the component (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the component (b) include 2,2-bis(4-cyanatophenyl)propane, 1,1-bis(4-cyanatophenyl)ethane, and bis(4-cyanatophenyl)methane.

Among the bifunctional compounds of the component (b), a bifunctional compound having a phenolic hydroxy group is preferable from the viewpoint of obtaining a thermoplastic polymer, a bifunctional compound having two phenolic hydroxy groups and having a bisphenol structure or a biphenyl structure is preferable from the viewpoint of heat resistance and joining property, and at least one selected from the group consisting of bisphenol A, bisphenol F, and bisphenol S is preferable from the viewpoint of heat resistance and cost.

In a case where the component (a) is a bisphenol A type epoxy resin, a bisphenol F type epoxy resin, a bisphenol S type epoxy resin, or a biphenyl type epoxy resin, and the component (b) is bisphenol A, bisphenol F, or bisphenol S, a polymer obtained by polymerization of the component (a) and the component (b) has a main skeleton of a para-phenylene structure and an ether bond, and has a structure having a main chain formed by linking the para-phenylene structure and the ether bond by an alkylene group, and a hydroxy group generated by polyaddition which is arranged in a side chain.

The linear structure having a para-phenylene skeleton can increase the mechanical strength of the polymer after polymerization, and the hydroxy group arranged in the side chain can improve the adhesiveness to the base material. As a result, a high joining strength can be realized while maintaining the workability of the thermosetting resin. Further, in the case of a thermoplastic resin, recycling and repairing become possible by softening and melting the resin with heat, and recyclability and repairability, which are problems in a thermosetting resin, can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present embodiment may be obtained by any production method. In the case of a direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among these, bisphenol A, bisphenol F, and bisphenol S are preferable from the viewpoint of cost, joining property, viscosity, and heat resistance. These may be used singly, or two or more kinds thereof may be used in combination.

The phenoxy resin has a chemical structure similar to that of the epoxy resin, and has a main skeleton of a para-phenylene structure and an ether bond, and has a structure having a main chain formed by linking the para-phenylene structure and the ether bond and a hydroxy group arranged in a side chain.

### <<Physical Properties of Thermoplastic Epoxy Resin and Phenoxy Resin>>

The weight-average molecular weight of the thermoplastic epoxy resin and the phenoxy resin, which is a value in terms of polystyrene by gel permeation chromatography (GPC) measurement, is preferably 10,000 to 500,000, more preferably 18,000 to 300,000, and further preferably 20,000 to 200,000. The weight-average molecular weight is calculated from an elution peak position detected by GPC, and is a value of a molecular weight in terms of standard polystyrene. When the weight-average molecular weight is within this value range, the balance between thermoplasticity and heat resistance is good, a joined object is efficiently obtained by melting, and the heat resistance thereof is also high. When the weight-average molecular weight is 10,000 or more, the heat resistance is excellent, and when the weight-average molecular weight is 500,000 or less, the viscosity at the time of melting is low, and the joining property is high.

### <<Components other than Resin Component in Thermoplastic Film B>>

If necessary, the thermoplastic film B may contain a filler or an additive as a component other than the resin component as long as the object of the present embodiment is not impaired.

Examples of the filler include an inorganic filler and an organic filler (such as a resin powder).

Examples of the inorganic filler include spherical fused silica, metal powders of metals such as iron, silica sand, talc, calcium carbonate, mica, acid clay, diatomaceous earth, kaolin, quartz, titanium oxide, silica, phenol resin microballoons, and glass balloons.

When the thermoplastic film B contains a filler, the content of the filler in 100% by volume of the total amount of the thermoplastic film B is preferably 50% by volume or less, more preferably 30% by volume or less, further preferably 20% by volume or less, and most preferably 10% by volume or less. The volume of the filler can be determined by dividing the weight of the filler contained in the thermoplastic film B by the apparent specific gravity of the filler.

The content of the resin component in 100% by volume of the total amount of the thermoplastic film B is preferably 10% by volume or more, more preferably 20% by volume or more, further preferably 30% by volume or more, still further preferably 50% by volume or more, and in one aspect, 80% by volume or more, in another aspect, 90% by volume or more, and in another aspect, 99% by volume or more.

Examples of the additive include an antifoaming agent, a coupling agent such as a silane coupling agent, a pigment, and a tackifier resin, and one or more of these may be contained.

The content of the additive in the thermoplastic film B is preferably 10% by mass or less, more preferably 5% by mass or less, and further preferably 1% by mass or less.

The content of the resin component in the thermoplastic film B is preferably 10% by mass or more, more preferably 20% by mass or more, further preferably 30% by mass or more, still further preferably 50% by mass or more, and in one aspect, 80% by mass or more, in another aspect, 90% by mass or more, and in another aspect, 99% by mass or more.

### <<Shape of Thermoplastic Film B>>

The thermoplastic film B is a sheet-shaped material.

The width of the thermoplastic film B in a direction perpendicular to the peripheral direction of the columnar base material A is preferably 3 to 30 mm. The width of the thermoplastic film B is indicated by b in Fig. 1.

From the viewpoint of obtaining a joined object firmly joined in a short joining process time, the width of the thermoplastic film B is more preferably 25 mm or less, and further preferably 20 mm or less. On the other hand, from the same viewpoint, the width of the thermoplastic film B is more preferably 4 mm or more, and further preferably 5 mm or more.

The thickness of the thermoplastic film B is preferably 10 µm or more and 3 mm or less. The thickness of the thermoplastic film B is indicated by c in Fig. 2.

From the viewpoint of obtaining a joined object firmly joined in a short joining process time, the thickness of the thermoplastic film B is more preferably 1 mm or less, further preferably 0.5 mm or less, still further preferably 0.3 mm or less, particularly preferably 0.2 mm or less, and most preferably 0.1 mm or less. On the other hand, from the viewpoint of further enhancing the adhesiveness and the leakage resistance, the thickness of the thermoplastic film B is more preferably 20 µm or more, still further preferably 30 µm or more, and particularly preferably 40 µm or more.

When the thickness of the thermoplastic film B is within the above numerical range, the thermoplastic film B can be efficiently spread on the joining surface with the columnar base material A by heating or the like, and high joining force and leakage resistance can be obtained.

The thermoplastic film B may be a single layer or may be a laminated body composed of a plurality of layers, and the thermoplastic film B is preferably a single layer from the viewpoint of ease of production and from the viewpoint of improving the joining force.

In addition, the thermoplastic film B may have tackiness as described above as long as the leakage resistance is not impaired. The tackiness may be imparted by mixing a tackifier resin with the thermoplastic resin constituting the thermoplastic film B, or by applying a pressure-sensitive adhesive to the surface of the thermoplastic film B. The tackiness may be imparted to one surface or both surfaces, and it is more preferable to impart the tackiness to one surface because the tackiness can be imparted only to the surface in contact with the columnar base material A and the adhesive surface is less likely to be exposed to the outside. The coating area of the pressure-sensitive adhesive may be the entire surface or a part thereof such as a stripe shape, a dot shape, a lattice shape, or a tile shape (a shape in which a plurality of squares are arranged with a gap). When the coating area is small, the pressure-sensitive adhesive is less likely to protrude outward from the end face of the thermoplastic film B and is less likely to be exposed, and thus the leakage resistance is less likely to decrease, which is preferable. In addition, the tackiness may be imparted only slightly enough to prevent slipping. That is, when the thermoplastic film B is wound around the columnar base material A, the thermoplastic film B may not stick to the columnar base material A, and the tackiness may be an extent in which the resistance is increased (the thermoplastic film B may be less likely to slip) when a force in the shearing direction is applied. It is preferable that the tackiness is low because the adhesive force is likely to be large and the leakage resistance is excellent.

### <<Method for Producing Thermoplastic Film B>>

The method for producing the thermoplastic film B is not particularly limited, and for example, the thermoplastic film B may be obtained by heating and polymerizing a monomer or an oligomer of a bifunctional epoxy compound to obtain a resin composition, adding a solvent to the obtained resin composition as necessary, applying the resin composition to a release film, curing and drying the resin composition, and pressurizing the resin composition as necessary. In addition, the polymerization reaction may be performed after applying to the release film, or may be performed after removing the solvent to obtain a film shape, or may be a combination thereof.

### [Step 2]

In the step 2, the resin C is joined by insert molding to the wound portion of the thermoplastic film B joined to the columnar base material A to seal the thermoplastic film B.

### [Insert Molding]

A conventionally known method can be used for the insert molding.

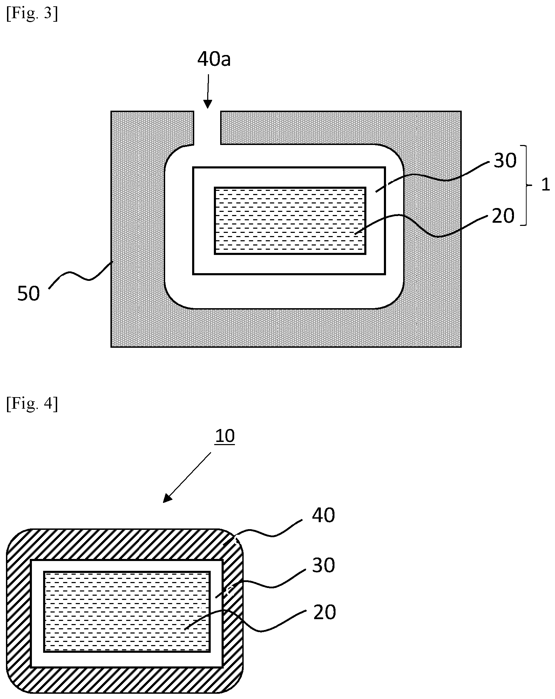

An example of an embodiment of the step 2 will be described with reference to Fig. 3 and Fig. 4. Fig. 3 is an illustrative view of the step 2 by a cross section of the film-attached base material obtained in the step 1 and a mold. Fig. 4 is a cross-sectional view of a cut surface parallel to the width direction of the joined object.

As shown in Fig. 3, a film-attached base material 1 obtained in the step 1 in which the thermoplastic film B 30 is wound around the columnar base material A 20 is placed in a cavity of a mold 50 for insert molding, and a resin C 40a melted by heating and pressurization is filled therein.

To be specific, after the film-attached base material 1 is placed in a cavity of the mold 50 for insert molding (Fig. 3), the resin C 40a is injected and filled into the cavity from a resin injection port provided in the mold. At this time, insert molding is performed so that the resin C is joined to cover at least a part of the thermoplastic film B 30 of the film-attached base material 1, preferably the whole thereof, and the molded product is taken out from the mold 50. Through the step 2, as shown in Fig. 4, a joined object 10 in which the columnar base material A 20 is sealed with the resin C 40 via the thermoplastic film B 30 is produced.

The mold for insert molding is not particularly limited, and a conventional mold can be used. Further, the mold can be heated or cooled as necessary.

As the shape of the gate for introducing the resin C into the cavity, various methods such as a direct gate method, a disk gate method, a side gate method, a fan gate method, a film gate method, and a tunnel gate method can be applied according to the shape of the joined object.

### [Resin C]

In the present embodiment, the resin C is used as a sealing material.

The resin C is not particularly limited as long as it can be insert-molded, but is preferably composed of one selected from the group consisting of a thermoplastic resin, a thermosetting resin, and a fiber reinforced plastic (FRP). Among these, the resin C is preferably a thermoplastic resin from the viewpoint of joining force, cost, and ease of molding.

Examples of the thermoplastic resin include polyolefins and acid-modified products thereof, polystyrene, polymethyl methacrylate, AS resin, ABS resin, thermoplastic aromatic polyesters such as polyethylene terephthalate and polybutylene terephthalate, polycarbonates, polyimides, polyamides, polyamideimides, polyetherimides, polyethersulfones, polyphenylene ethers and modified products thereof, polyphenylene sulfides, polyoxymethylenes, polyarylates, polyether ketones, polyether ether ketones, polyether ketone ketones, thermoplastic epoxies, and fiber reinforcing materials thereof. In addition, as the thermosetting resin, for example, one or more selected from an epoxy resin, a vinyl ester resin, a phenol resin, and a urethane resin can be used. From the viewpoint of heat resistance, joining force, cost, and ease of molding, it is preferable to use at least one selected from polycarbonate, glass fiber-reinforced polyamide, glass fiber-reinforced polybutylene terephthalate, and glass fiber-reinforced polyphenylene sulfide.

The molding temperature (resin temperature) of the resin C is preferably 100°C to 400°C, more preferably 150°C to 350°C, and further preferably 180°C to 300°C. By performing the injection molding in the range of 100°C to 400°C, the thermoplastic film B is efficiently deformed and melted by heating, and effectively wets and spreads on the joining surface, so that a high joining force can be obtained.

The combination of the material of the columnar base material A and the resin C is not particularly limited.

In the joined object of the present embodiment, the thickness of the resin C (sealing material) is not particularly limited, and can be appropriately set according to the application within a range in which the joining force and the leakage resistance are excellent.

### <Joined Object>

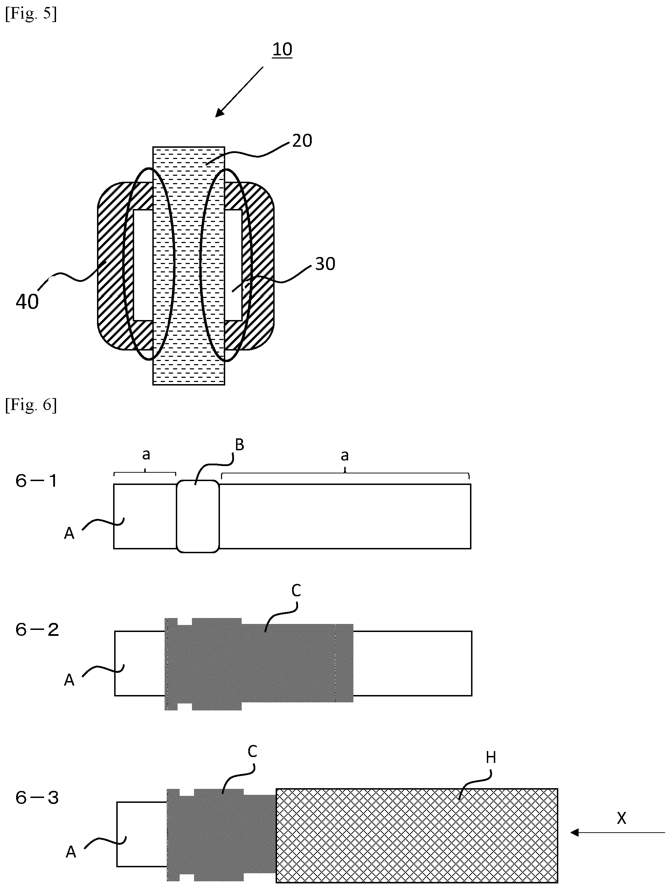

An example of the joined object produced by the method for producing a joined object of the present embodiment will be described with reference to Fig. 5.

Fig. 5 is a cross-sectional view of a cut surface parallel to the length direction of the joined object.

As shown in Fig. 5, the joined object 10 is formed by sealing the columnar base material A 20 with the resin C 40 via the thermoplastic film B 30. By interposing the thermoplastic film B 30, the columnar base material A 20 and the resin C 40 have excellent joining strength and excellent adhesiveness. Therefore, it is possible to prevent entry and exit of air from the sealing portion surrounded by the solid line, and it is possible to exhibit leakage resistance.

The joined object of the present embodiment exhibits excellent joining strength even in a joined object of dissimilar materials. Since the joining strength is affected by many factors such as the thickness of the thermoplastic film B, the molecular weight and chemical structure of the polymer constituting the thermoplastic film B, mechanical properties, and viscoelastic properties, in addition to the strength of the interfacial interaction acting between the thermoplastic film B and the columnar base material A and between the thermoplastic film B and the resin C, the details of the mechanism by which the joined object of the present embodiment exhibits excellent joining strength and leakage resistance are not clear.

In a more preferred embodiment of the joined object, the thermoplastic film B contains, as a main component, an amorphous thermoplastic resin which is at least one of a thermoplastic epoxy resin and a phenoxy resin. The details of the mechanism by which the more preferred embodiment exhibits more excellent joining strength and leakage resistance are not clear, but it is presumed that the main factors are that the cohesive force in the amorphous thermoplastic resin is low, and when a hydroxy group is present in the resin, a chemical bond or an intermolecular force such as a hydrogen bond or a van der Waals force is formed at the interface between the thermoplastic film B and the columnar base material A and the interface between the thermoplastic film B and the resin C.

However, in the joined object of the present embodiment, the states or characteristics of the interface between the thermoplastic film B and the columnar base material A and the interface between the thermoplastic film B and the resin C are very thin chemical structures at a nanometer level or less, and are difficult to analyze. Therefore, it is impossible or impractical in the current technology to express the states or characteristics of the interfaces so as to distinguish them from those not depending on the use of the thermoplastic film B by specifying the states or characteristics of the interfaces.

In a more preferred embodiment, for example, when a leakage test is performed by applying an air pressure of 0.1 MPaG to the sealed portion of the joined object, the amount of air leakage is preferably 1 mL/min or less.

In addition, the joined object of the present embodiment can effectively relax stress during a thermal cycle. Therefore, in a still further preferred embodiment, for example, when the joined object is heated to a temperature equal to or higher than the glass transition temperature of the thermoplastic film B and equal to or lower than 160°C, kept at the temperature for 1000 minutes, cooled to 23°C, and then subjected to the leakage test, an amount of air leakage is preferably 1 mL/min or less.

Specifically, the amount of leakage is a value measured by a leakage test described in Examples.

In the joined object of the present embodiment, the columnar base material A and the resin C are firmly joined to each other, the columnar base material A and the resin C are less likely to be peeled off from each other during a thermal cycle, and the joined object has excellent leakage resistance. Therefore, the joined object can be suitably used in applications in which the properties can be exhibited. For example, an electric/electronic component including the joined object of the present embodiment can be provided. To be more specific, as shown in Fig. 5, it is possible to provide a terminal block, a bus bar, or an electric element of an automobile or an electric/electronic component including the joined object 10 of the present embodiment, in which the entirety of the thermoplastic film B 30 on the columnar base material A 20 is covered and sealed with the resin C 40.

### Examples

Hereinafter, the present embodiment will be specifically described with reference to Examples and Comparative Examples, but the present embodiment is not limited thereto.

In Examples and Comparative Examples, a joined object was produced by joining a columnar base material A, a thermoplastic film B or a joining agent, and a resin C in this order. Hereinafter, the layer formed of the thermoplastic film B or the joining agent is referred to as an intermediate layer.

The following materials were used in Examples and Comparative Examples.

### <Columnar Base Material A>

C1100 (tough pitch copper) having a width of 12.4 mm, a length of 64.9 mm, and a thickness of 1.6 mm

### <Thermoplastic Film B>

Films P-1 to P-14 produced in Examples 1 to 14

### <Joining Agent>

Joining agents Q-1 to Q-4 produced in Comparative Examples 1 to 4

### <Resin C>

Polyphenylene sulfide (containing 30% by mass of GF)

### <Weight-Average Molecular Weight, Heat of Fusion, Melting Point, and Epoxy Equivalent of Thermoplastic Film B and Joining Agent>

### (Weight-average molecular weight)

The thermoplastic film B or the joining agent was dissolved in tetrahydrofuran, and measurement was performed under the following conditions using Prominence 501 (manufactured by Showa Science Co., Ltd., Detector: Shodex (registered trademark) RI-501 (manufactured by Resonac Corporation)).
Column: LF-804 (manufactured by Resonac Corporation) × 2
Column temperature: 40°C
Sample: 0.4% by mass tetrahydrofuran solution of resin
Flow rate: 1 mL/min
Eluent: Tetrahydrofuran
Calibration method: Conversion using standard polystyrene

### (Heat of Fusion and Melting Point)

Two to ten mg of each of the thermoplastic film B and the joining agent were weighed, placed in an aluminum pan, and the temperature was increased from 23°C to 200°C at a rate of 10°C/min using a DSC (DSC8231 manufactured by Rigaku Corporation), thereby obtaining a DSC curve. The heat of fusion was calculated from the area of the endothermic peak at the time of melting of the DSC curve and the above weighed value. The melting peak temperature of the obtained DSC curve was defined as the melting point (X°C). In a case where a melting peak is not obtained or a heat of fusion is 15 J/g or less, a temperature obtained by adding 70°C to the glass transition temperature was defined as the melting point (X°C). The glass transition temperature was defined as the temperature at the start of descent of the DSC curve in the second cycle of a cycle in which the temperature is raised to 200°C by DSC, then cooled to 40°C or lower, and further heated to 200°C. The melting point was not measured for the thermosetting resins that were not melted by heating.

### (Epoxy Equivalent)

The epoxy equivalent was measured in accordance with JIS K-7236:2001 and converted into a value as a resin solid content. In the case of a simple mixture not accompanied by a reaction, the epoxy equivalent was calculated from each epoxy equivalent and the content thereof.

### <Y - X(°C)>

The melting point of the thermoplastic film B and the joining agent was taken as X°C, the resin temperature at the time of injection molding of the resin C was taken as Y°C, and a value (Y°C - X°C) obtained by subtracting X°C from Y°C was calculated.

### [Example 1]

### (Film P-1)

A reactor equipped with a stirrer, a reflux condenser, a gas introduction tube, and a thermometer was charged with 1.0 equivalent (203 g) of jER (registered trademark) 1007 (manufactured by Mitsubishi Chemical Corporation, bisphenol A type epoxy resin, weight-average molecular weight: about 10,000), 1.0 equivalent (12.5 g) of bisphenol S, 2.4 g of triphenylphosphine, and 1,000 g of methyl ethyl ketone, and the temperature was raised to 100°C while stirring in a nitrogen gas atmosphere. Dissolution was visually confirmed, and the mixture was cooled to 40°C to obtain a thermoplastic epoxy resin composition having a solid content of about 20% by mass. The solvent was removed therefrom to obtain a thermoplastic composition epoxy resin as a solid component. A non-adhesive fluororesin film (NITOFLON (registered trademark) No. 900UL, manufactured by Nitto Denko Corporation) was installed on the upper plate and the lower plate of the press machine, the above-described thermoplastic epoxy resin was disposed on the non-adhesive fluororesin film of the lower plate, then the press machine was heated to 160°C, and the thermoplastic composition epoxy resin was heated and compressed for 2 hours to obtain a film P-1 having a solid content of 100% by mass, a length of 32 to 33 mm, and a thickness and a width shown in Table 1-1.

### (Step 1)

A tape adhesive (manufactured by KOKUYO Co., Ltd., product number: TA-DM400-08) was applied to one surface of the columnar base material A, and the film P-1 was wound once around the columnar base material A so as to overlap the applied portion and to form a wrap portion having a thickness of 2 to 3 mm. Fig. 6 is a schematic view of a joined object for explaining an example. As shown in 6-1 of Fig. 6, the non-adhering portion a of the film P-1 (B) was provided, and the film P-1 (B) was wound around the columnar base material A (A).

Next, the columnar base material A (A) around which the film P-1 (B) was wound was heated at a heating temperature and for a heating time shown in Table 1-1, thereby melting the film P-1 (B). Thereafter, the film was allowed to cool at ordinary temperature for 1 minute to solidify the film P-1 (B), thereby obtaining a film-attached base material in which the columnar base material A (A) and the film P-1 (B) were joined to each other.

The operation method of the present Step 1 is shown in Table 1-1 as "Winding Method 1".

### (Step 2)

Using an injection molding machine (manufactured by TOYO MACHINERY & METAL CO., LTD., model name: "Si-100-6s") and a mold, the resin C was insert-molded and joined to the portion of the film-attached base material around which the film P-1 (B) was wound, thereby obtaining a joined object of the columnar base material A and the resin C. The conditions of the insert-molding were an injection-molding temperature (resin temperature) of 300°C, a mold temperature of 135°C, an injection speed of 15 mm/sec, an injection pressure of 130 MPa, a holding pressure of 70 MPa, a holding time of 4 seconds, and a cooling time of 30 seconds. In Fig. 6, 6-2 shows a schematic diagram of the joined object of the columnar base material A (A) and the resin C (C) obtained by Step 2.

### [Examples 2 to 6]

### (Films P-2 to P-6)

Films P-2 to P-6 were obtained in the same manner as in Example 1, except that the thickness and width of the film were changed to the values shown in Table 1-1.

### (Step 1 and Step 2)

Next, according to the conditions shown in Table 1-1, Step 1 and Step 2 were performed in the same manner as in Example 1, thereby obtaining a joined object of the columnar base material A and the resin C.

### [Example 7]

### (Film P-7)

A film P-7 was obtained in the same manner as in Example 1, except that the thickness and width of the film were changed to the values shown in Table 1-1.

### (Step 1)

Next, the film P-7 was wound once around the columnar base material A so as to form a wrap portion having a thickness of 2 to 3 mm. The columnar base material A was provided with a non-adhering portion of the film in the same manner as in Example 1.

Next, in a state in which the film P-7 portion wound around the columnar base material A was fixed by a clip, the film P-7 was heated at a heating temperature and for a heating time shown in Table 1-1, thereby melting the film P-7. Thereafter, the film was allowed to cool at ordinary temperature for 1 minute to solidify the film P-7, thereby obtaining a film-attached base material in which the columnar base material A and the film P-7 were joined to each other.

The operation method of the present Step 1 is shown in Table 1-1 as "Winding Method 2".

### (Step 2)

Next, Step 2 was performed in the same manner as in Example 1, thereby obtaining a joined object of the columnar base material A and the resin C.

### [Example 8]

### (Film P-8)

A reactor equipped with a stirrer, a reflux condenser, a gas introduction tube, and a thermometer was charged with 20 g of Phenotohto (registered trademark) YP-50S (manufactured by NIPPON STEEL Chemical & Material Co., Ltd., phenoxy resin, weight-average molecular weight: about 50,000) and 80 g of cyclohexanone, and the temperature was raised to 60°C while stirring. Dissolution was visually confirmed, and the mixture was cooled to 40°C to obtain a phenoxy resin composition having a solid content of 20% by mass. The solvent was removed therefrom, and the residue was heated at 160°C to obtain a film P-8 having a solid content of 100% by mass, a length of 33 mm, and a thickness and a width shown in Table 1-2.

### (Step 1 and Step 2)

According to the conditions shown in Table 1-2, Step 1 and Step 2 were performed in the same manner as in Example 7, thereby obtaining a joined object of the columnar base material A and the resin C.

### [Example 9]

### (Film-9)

A film-9 was obtained in the same manner as in Example 8 except that the width of the film was set to 10 mm.

### (Step 1 and Step 2)

Step 1 and Step 2 were performed in the same manner as in Example 1 using the film P-9 instead of the film P-1, thereby obtaining a joined object of the columnar base material A and the resin C.

### [Example 10]

### (Film P-10)

A film P-10 was obtained in the same manner as in the production of the film P-8 of Example 8 except that 5% by mass (in terms of solid contents) of a tackifier resin (Tamanol 803L, manufactured by Arakawa Chemical Industries, Ltd.) was added.

### (Step 1 and Step 2)

Step 1 and Step 2 were performed in the same manner as in Example 7 using the film P-10 instead of the film P-7, thereby obtaining a joined object of the columnar base material A and the resin C.

### [Example 11]

### (Film P-11)

A film P-11 was obtained in the same manner as in the production of the film P-8 of Example 8 except that 10% by mass (in terms of solid contents) of a tackifier resin (YS Polyster K125, manufactured by YASUHARA CHEMICAL CO.,LTD.) was added.

### (Step 1 and Step 2)

Step 1 and Step 2 were performed in the same manner as in Example 7 using the film P-11 instead of the film P-7, thereby obtaining a joined object of the columnar base material A and the resin C.

### [Example 12]

### (Film P-12)

A film P-12 was obtained in the same manner as in Example 1, except that the thickness and width of the film were changed to the values shown in Table 1-2.

### (Step 1)

An emulsion-type pressure-sensitive adhesive (POLYSOL (registered trademark) PSA SE-8001, manufactured by Resonac Corporation) was applied to one surface of the film P-12 and dried at 100°C for 5 minutes. The surface of the film P-12 to which the pressure-sensitive adhesive was applied was wound once around the columnar base material A so as to form a wrap portion having a thickness of 2 to 3 mm, thereby obtaining a film-attached base material. The columnar base material A was provided with a non-adhering portion of the film in the same manner as in Example 1.

### (Step 2)

Step 2 was performed in the same manner as in Example 1, thereby obtaining a joined object of the columnar base material A and the resin C.

### [Example 13]

### (Film P-13)

A crystalline polyamide-based hot-melt adhesive film (ELPHAN (registered trademark) NT-120, manufactured by Nihon Matai Co., Ltd.) was used to prepare a film P-13 having a length of 33 mm and a thickness and a width shown in Table 1-2.

In the film P-13, the weight-average molecular weight and the epoxy equivalent could not be measured because the film was insoluble in the solvent.

### (Step 1 and Step 2)

According to the conditions shown in Table 1-2, Step 1 and Step 2 were performed in the same manner as in Example 1, thereby obtaining a joined object of the columnar base material A and the resin C.

### [Example 14]

### (Film P-14)

A polycarbonate film (Iupilon (registered trademark) sheet FE-2000, manufactured by MITSUBISHI GAS CHEMICAL COMPANY, INC., thickness: 100 µm) was used, and a film P-14 having a length of 33 mm, and a thickness and a width shown in Table 1-2 was obtained.

### (Step 1 and Step 2)

According to the conditions shown in Table 1-2, Step 1 and Step 2 were performed in the same manner as in Example 1, thereby obtaining a joined object of the columnar base material A and the resin C.

### [Comparative Example 1]

### (Joining Agent Q-1)

A reactor equipped with a stirrer, a reflux condenser, a gas introduction tube, and a thermometer was charged with 1.0 equivalent (285 g) of jER (registered trademark) 1001 (manufactured by Mitsubishi Chemical Corporation, bisphenol A type epoxy resin, molecular weight: about 900), 1.0 equivalent (63 g) of SHONOL (registered trademark) BRG-556 (manufactured by Aica Kogyo Company, Limited, novolac type phenol resin), 1.4 g of triphenylphosphine, and 650 g of methyl ethyl ketone, and the temperature was raised to 100°C while stirring in a nitrogen gas atmosphere. Dissolution was visually confirmed, and the mixture was cooled to 40°C to obtain a solution of a thermosetting epoxy resin (joining agent Q-1) having a solid content of about 20% by mass.

### (Step 1)

The joining agent Q-1 was applied to the columnar base material A and heated at 160°C for 30 minutes to cure the joining agent. Thereafter, the resultant was cooled to room temperature to form an intermediate layer formed of the joining agent Q-1. The columnar base material A was provided with a non-adhering portion of the joining agent in the same manner as in Example 1. The width of the intermediate layer is as shown in Table 2.

The operation method of the present Step 1 is shown in Table 2 as "Coating Method".

### (Step 2)

In the same manner as in Step 2 of Example 1, the resin C was insert-molded and joined to obtain a joined object of the columnar base material A and the resin C.

### [Comparative Example 2]

### (Joining Agent Q-2)

A reactor equipped with a stirrer, a reflux condenser, a gas introduction tube, and a thermometer was charged with 1.0 equivalent (285 g) of jER (registered trademark) 1001 (manufactured by Mitsubishi Chemical Corporation, bisphenol A type epoxy resin, molecular weight: about 900), 1.0 equivalent (63 g) of SHONOL (registered trademark) BRG-556 (manufactured by Aica Kogyo Company, Limited, novolac type phenol resin), 1.4 g of triphenylphosphine, and 650 g of methyl ethyl ketone, and the temperature was raised to 100°C while stirring in a nitrogen gas atmosphere. Dissolution was visually confirmed, and the mixture was cooled to 40°C to obtain a solution of a thermosetting epoxy resin having a solid content of about 20% by mass. The solvent was removed therefrom to obtain a thermosetting epoxy resin as a solid. A non-adhesive fluororesin film (NITOFLON (registered trademark) No. 900UL, manufactured by Nitto Denko Corporation) was installed on the upper plate and the lower plate of the press machine, the solid was disposed on the non-adhesive fluororesin film of the lower plate, and then the press machine was heated to 160°C, and the thermosetting epoxy resin was heated and compressed for 2 hours to be cured, thereby obtaining a film Q-2 having a solid content of 100% by mass, a length of 33 mm, and a thickness and a width shown in Table 2.

### (Step 1 and Step 2)

According to the conditions shown in Table 2, Step 1 and Step 2 were performed in the same manner as in Example 1, thereby obtaining a joined object of the columnar base material A and the resin C.

### [Comparative Example 3]

### (Joining Agent Q-3)

A reactor equipped with a stirrer, a reflux condenser, a gas introduction tube, and a thermometer was charged with 1.0 equivalent (203 g) of jER (registered trademark) 1007 (manufactured by Mitsubishi Chemical Corporation, bisphenol A type epoxy resin, molecular weight: about 10,000), 1.0 equivalent (12.5 g) of bisphenol S, 2.4 g of triphenylphosphine, and 1,000 g of methyl ethyl ketone, and the mixture was stirred at ordinary temperature to obtain a solution of an amorphous thermoplastic epoxy resin (joining agent Q-3) having a solid content of about 20% by mass.

### (Step 1 and Step 2)

According to the conditions shown in Table 2, Step 1 and Step 2 were performed in the same manner as in Comparative Example 1, thereby obtaining a joined object of the columnar base material A and the resin C.

### [Comparative Example 4]

### (Joining Agent Q-4)

A reactor equipped with a stirrer, a reflux condenser, a gas introduction tube, and a thermometer was charged with 0.05 equivalents (98 g) of jER (registered trademark) 1007 (manufactured by Mitsubishi Chemical Corporation, bisphenol A type epoxy resin, weight-average molecular weight: about 10,000), 0.95 equivalents (238 g) of PG-100 (manufactured by Osaka Gas Chemicals Co., Ltd., fluorene skeleton epoxy resin), 1.0 equivalent (125 g) of bisphenol S, 2 g of triphenylphosphine, and 1,000 g of methyl ethyl ketone, and the temperature was raised to 100°C while stirring in a nitrogen gas atmosphere. Dissolution was visually confirmed, and the mixture was cooled to 40°C to obtain a solution of an amorphous thermoplastic epoxy resin (joining agent Q-4) having a solid content of about 35% by mass. The weight-average molecular weight and the epoxy equivalent of the joining agent Q-4 could not be measured because the joining agent Q-4 was partially insoluble in the solvent.

### (Step 1)

Step 1 was performed in the same manner as in Comparative Example 1 except that the joining agent Q-4 was applied to the columnar base material A, heated at 120°C for 60 minutes, and then heated at 180°C for 120 minutes, thereby obtaining a joined object of the columnar base material A and the resin C.

### (Step 2)

In the same manner as in Step 2 of Example 1, the resin C was insert-molded and joined to obtain a joined object of the columnar base material A and the resin C.

### <Workability>

The workability was evaluated from the viewpoint of the joining process time required for Step 1 and the handleability. When a film was used in Step 1, the joining process time was shorter than that when a solution was used, and liquid dripping did not occur, so that the intermediate layer could be easily formed.

Therefore, the workability evaluation in a case where the film was used was evaluated as good and was shown as "good" in Tables 1-1, 1-2, and 2. In addition, the workability evaluation in a case where the solution was used was evaluated as extremely inferior to the case of the film and was shown as "poor" in Tables 1-1, 1-2, and 2.

### <Leakage Test>

As shown in 6-3 of Fig. 6, hose H was inserted into the joined object produced in each of Examples and Comparative Examples, and the joint between the resin C and the hose H and the periphery thereof were coated with an adhesive for a silicone resin and sealed. A plug coupler was attached to the tip of the hose H to which the joined object was not attached, and the hose was connected to a compressor. After the entire joined object at the tip of the hose to which the joined object was attached was submerged in water, air X was fed into the hose H in the direction of the joined object at an air pressure of 0.1 MPaG, and air bubbles in leaking water were visually observed. This operation was performed on 10 joined objects produced in each of Examples and Comparative Examples, and the adhesiveness between the columnar base material A and the resin C was evaluated according to the following evaluation criteria. The evaluation results are shown in Tables 1-1, 1-2, and 2.

When no air bubbles are observed in the water, the amount of air leakage can be considered to be 1 mL/min or less.

### <Evaluation criteria>

A: Bubbles were not observed 10 times out of 10 times.
B: Bubbles were not observed 8 to 9 times out of 10 times.
C: Bubbles were not observed 5 to 7 times out of 10 times.
D: Bubbles were not observed 0 to 4 times out of 10 times.

### <Leakage Test after Thermal Cycle>

The joined objects produced in each of Examples and Comparative Examples were subjected to 100 cycles of a thermal cycle treatment in which the joined objects were alternately placed in an atmosphere of 125°C and -40°C, and then subjected to the leakage test described above. Evaluation criteria were also performed in the same manner as in the leakage test.

### <Leakage Test after Heat Resistance Treatment>

The joined objects produced in each of Examples and Comparative Examples were allowed to stand still in an oven at 160°C for 1000 hours, and then allowed to cool and then subjected to the leakage test described above. Evaluation criteria were also performed in the same manner as in the leakage test.

**Table 1-1**

| | | Example 1 | Example 2 | Example 3 | Example 4 |
|---|---|---|---|---|---|
| Intermediate layer | Resin main component | Thermoplastic epoxy resin | Thermoplastic epoxy resin | Thermoplastic epoxy resin | Thermoplastic epoxy resin |
| | Weight-average molecular weight | 37000 | 37000 | 37000 | 37000 |
| | Heat of fusion (J/g) | No melting peak | No melting peak | No melting peak | No melting peak |
| | Epoxy equivalent (g/eq) | Equal to or higher than detection limit | Equal to or higher than detection limit | Equal to or higher than detection limit | Equal to or higher than detection limit |
| | Melting point X (°C) | 171 | 171 | 171 | 171 |
| | Shape | Film | Film | Film | Film |
| | Thickness (µm) | 160 | 160 | 40 | 40 |
| | Width (mm) | 10 | 20 | 5 | 10 |
| Step 1 | Operation method | Winding Method 1 | Winding Method 1 | Winding Method 1 | Winding Method 1 |
| | Heating temperature × Heating time | 200°C × 15 min | 200°C × 15 min | 200°C × 15 min | 200°C × 15 min |
| | Y - X (°C) | 129 | 129 | 129 | 129 |
| Evaluation | Workability | Good | Good | Good | Good |
| | Leakage test | A | A | A | A |
| | Leakage test after thermal cycle | A | A | A | A |
| | Leakage test after heat resistance treatment | A | A | A | A |

**Table 1-1 (continued)**

| | | Example 5 | Example 6 | Example 7 |
|---|---|---|---|---|
| Intermediate layer | Resin main component | Thermoplastic epoxy resin | Thermoplastic epoxy resin | Thermoplastic epoxy resin |
| | Weight-average molecular weight | 37000 | 37000 | 37000 |
| | Heat of fusion (J/g) | No melting peak | No melting peak | No melting peak |
| | Epoxy equivalent (g/eq) | Equal to or higher than detection limit | Equal to or higher than detection limit | Equal to or higher than detection limit |
| | Melting point X (°C) | 171 | 171 | 171 |
| | Shape | Film | Film | Film |
| | Thickness (µm) | 40 | 40 | 40 |
| | Width (mm) | 20 | 5 | 5 |
| Step 1 | Operation method | Winding Method 1 | Winding Method 1 | Winding Method 2 |
| | Heating temperature × Heating time | 200°C × 15 min | 200°C × 10 min | 200°C × 15 min |
| | Y - X (°C) | 129 | 129 | 129 |
| Evaluation | Workability | Good | Good | Good |
| | Leakage test | A | A | A |
| | Leakage test after thermal cycle | A | A | A |
| | Leakage test after heat resistance treatment | A | A | A |

**Table 1-2**

| | | Example 8 | Example 9 | Example 10 | Example 11 |
|---|---|---|---|---|---|
| Intermediate layer | Resin main component | Phenoxy resin | Phenoxy resin | Phenoxy resin | Phenoxy resin |
| | Weight-average molecular weight | 50000 | 50000 | 50000 | 50000 |
| | Heat of fusion (J/g) | No melting peak | No melting peak | No melting peak | No melting peak |
| | Epoxy equivalent (g/eq) | Equal to or higher than detection limit | Equal to or higher than detection limit | Equal to or higher than detection limit | Equal to or higher than detection limit |
| | Melting point X (°C) | 164 | 164 | 164 | 164 |
| | Shape | Film | Film | Film | Film |
| | Thickness (µm) | 40 | 40 | 40 | 40 |
| | Width (mm) | 5 | 10 | 5 | 5 |
| Step 1 | Operation method | Winding Method 2 | Winding Method 1 | Winding Method 2 | Winding Method 2 |
| | Heating temperature × Heating time | 200°C × 15 min | 200°C × 15 min | 200°C × 15 min | 200°C × 15 min |
| | Y - X (°C) | 136 | 136 | 136 | 136 |
| Evaluation | Workability | Good | Good | Good | Good |
| | Leakage test | A | A | A | A |
| | Leakage test after thermal cycle | A | A | A | A |
| | Leakage test after heat resistance treatment | A | A | A | A |

**Table 1-2 (continued)**

| | | Example 12 | Example 13 | Example 14 |
|---|---|---|---|---|
| Intermediate layer | Resin main component | Thermoplastic epoxy resin | Polyamide resin | Polycarbonate |
| | Weight-average molecular weight | 37000 | - | - |
| | Heat of fusion (J/g) | No melting peak | 60 | No melting peak |
| | Epoxy equivalent (g/eq) | Equal to or higher than detection limit | - | - |
| | Melting point X (°C) | 171 | 101 | 220 |
| | Shape | Film | Film | Film |
| | Thickness (µm) | 40 | 40 | 100 |
| | Width (mm) | 5 | 10 | 10 |
| Step 1 | Operation method | Only winding | Winding Method 1 | Winding Method 1 |
| | Heating temperature × Heating time | | 200°C × 5 min | 200°C × 15 min |
| | Y - X (°C) | 129 | 199 | 80 |
| Evaluation | Workability | Good | Good | Good |
| | Leakage test | B | B | C |
| | Leakage test after thermal cycle | B | B | C |
| | Leakage test after heat resistance treatment | B | B | C |

**Table 2**

| | | Comparative Example 1 | Comparative Example 2 | Comparative Example 3 | Comparative Example 4 |
|---|---|---|---|---|---|
| Intermediate layer | Resin main component | Thermosetting epoxy resin | Thermosetting epoxy resin | Thermoplastic epoxy resin | Thermoplastic epoxy resin |
| | Weight-average molecular weight | - | - | 40000 | - |
| | Heat of fusion (J/g) | - | - | No melting peak | No melting peak |
| | Epoxy equivalent (g/eq) | - | - | Equal to or higher than detection limit | - |
| | Melting point X (°C) | None | None | 171 | 220 |
| | Shape | Solution | Film | Solution | Solution |
| | Thickness (µm) | - | 40 | - | - |
| | Width (mm) | 5 | 5 | 5 | 5 |
| Step 1 | Operation method | Coating Method | Winding Method 1 | Coating Method | Coating Method |
| | Heating temperature × Heating time | 160°C × 30 min | 160°C × 30 min | 160°C × 120 min | 120°C × 60 min → 180°C × 120 min |
| | Y - X (°C) | - | - | 129 | 80 |
| Evaluation | Workability | Poor | Good | Poor | Poor |
| | Leakage test | D | D | A | D |
| | Leakage test after thermal cycle | D | D | A | D |
| | Leakage test after heat resistance treatment | D | D | A | D |

### Industrial Applicability

The production method and the joined object of the present embodiment are used, for example, in applications such as terminals, bus bars, and electric elements of automobiles and electric/electronic components, but are not particularly limited to these exemplary applications.

### Reference Signs List

1: Film-attached base material
10: Joined object of the present embodiment
20: Columnar base material A
30: Thermoplastic film B
40, 40a: Resin C
50: Mold
a: Non-adhering portion
b: Width of thermoplastic film B
c: Thickness of thermoplastic film B
A: Columnar base material A
B: Thermoplastic film B
C: Resin C
H: Hose
X: Air

## Claims

1. A method for producing a joined object obtained by joining a columnar base material A, a thermoplastic film B, and a resin C in this order, the method comprising sequentially performing:
a step 1 of winding the thermoplastic film B around at least a part of an outer periphery of the columnar base material A in a peripheral direction; and
a step 2 of joining the resin C to a portion of the columnar base material A around which the thermoplastic film B is wound by insert molding to seal the thermoplastic film B.

2. The method for producing a joined object according to claim 1, wherein the thermoplastic film B has adhesive property to the columnar base material A.

3. The method for producing a joined object according to claim 1 or 2, wherein in the step 1, an operation of melting and solidifying the wound thermoplastic film B to join the columnar base material A and the thermoplastic film B is further performed.

4. The method for producing a joined object according to claim 3, wherein in the step 1, the joining of the columnar base material A and the thermoplastic film B is performed by at least one selected from the group consisting of contact heating, hot air heating, hot pressing, infrared heating, hot plate welding, ultrasonic welding, vibration welding, and high-frequency induction welding.

5. The method for producing a joined object according to claim 3, wherein in the step 1, the joining of the columnar base material A and the thermoplastic film B is performed at a heating temperature of 100 to 300°C.

6. The method for producing a joined object according to claim 1 or 2, wherein a width of the thermoplastic film B in a direction perpendicular to the peripheral direction is 3 to 30 mm.

7. The method for producing a joined object according to claim 1 or 2, wherein the thermoplastic film B has a thickness of 10 µm or more and 3 mm or less.

8. The method for producing a joined object according to claim 1 or 2, wherein when the melting point of the thermoplastic film B or a temperature obtained by adding 70°C to the glass transition point temperature when the melting point does not exist is taken as X°C, and the resin temperature at the time of molding the resin C is taken as Y°C, a value obtained by subtracting the X°C from the Y°C is 100 to 250°C.

9. The method for producing a joined object according to claim 1 or 2, wherein the thermoplastic film B contains an amorphous thermoplastic resin as a main component.

10. The method for producing a joined object according to claim 9, wherein the amorphous thermoplastic resin is at least one selected from the group consisting of a thermoplastic epoxy resin and a phenoxy resin.

11. The method for producing a joined object according to claim 1 or 2, wherein the thermoplastic film B is a thermoplastic resin having an epoxy equivalent of 1,600 g/eq. or more or containing no epoxy group.

12. The method for producing a joined object according to claim 1 or 2, wherein the columnar base material A is a metal.

13. The method for producing a joined object according to claim 1 or 2, wherein the resin C is a thermoplastic resin.

14. A joined object obtained by the method for producing a joined object according to claim 1, wherein when a leakage test is performed by applying an air pressure of 0.1 MPaG to the sealing portion, an amount of air leakage is 1 mL/min or less.

15. The joined object according to claim 14, wherein when the joined object is heated to a temperature equal to or higher than the glass transition temperature of the thermoplastic film B and equal to or lower than 160°C, kept at the temperature for 1000 minutes, cooled to 23°C, and then subjected to the leakage test, an amount of air leakage is 1 mL/min or less.

16. An electric/electronic component comprising a joined object selected from a joined object obtained by the method for producing a joined object according to claim 1 and a joined object according to claim 14.

17. The electric/electronic component according to claim 16, which is a terminal block or an electric element.
